**Europäisches Patentamt**

**European Patent Office**

**Office européen des brevets**

(19)

(11) Publication number : **0 677 244 A1**

# (12) EUROPEAN PATENT APPLICATION

(21) Application number : **95301938.7**

(22) Date of filing : **23.03.95**

(51) Int. Cl.⁶ : **A01K 1/015,** B01J 20/18

(30) Priority : **15.04.94 US 228464**

(43) Date of publication of application :
**18.10.95 Bulletin 95/42**

(84) Designated Contracting States :
**AT BE CH DE DK ES FR GB GR IE IT LI LU MC NL PT SE**

(71) Applicant : **ENGELHARD CORPORATION**
**101 Wood Avenue**
**Iselin, New Jersey 08830-0770 (US)**

(72) Inventor : **Kramer, Larry J.**
**311 Meadow Ridge Drive**
**Tallahassee, FL. 32312 (US)**

(74) Representative : **Geering, Keith Edwin**
**REDDIE & GROSE**
**16 Theobalds Road**
**London WC1X 8PL (GB)**

(54) **Improved sorbent composition.**

(57)    Disclosed are sorbent compositions suitable for dewatering and deodorizing waste materials such as animal urine and industrial and sewer wastes. These compositions are described as formed particulates comprised of (A) at least one powdered zeolite material ; and (B) at least one clay material having a clay mineral content of at least 10% by weight.
   Also disclosed are processes for making such compositions, litters using such compositions and a method for deodorizing organic waste which comprises contacting said waste with these compositions.

EP 0 677 244 A1

## Background of the Invention

### Field of the Invention

This invention relates to novel sorbent compositions useful as animal litters having improved odor control properties and liquid sorbency.

### Description of Related Art

Sorbent materials have been used in the treatment of waste materials such as sewer and industrial waste, animal urine and other odor producing materials.

U.S. Patents Nos. 4,036,928 and 4,187,803 describe a process for pelletizing sorptive mineral "fines" which includes adding sufficient moisture to the particles of the sorptive material to occupy the pore space therein, compactly forming the moistened material in a pelletizing machine, then removing the pore moisture in a suitable dryer or kiln so that final pellets retain relatively the same absorbent capacity in bulk density as the original material.

U.S. Patent No. 4,085,704 describes an animal litter which slowly, continuously and uniformly releases an odor control agent, comprising a suitable absorbent material admixed with a vehicle which has been previously impregnated with an odor control agent. A method of imparting long-lasting, continuous, uniform, slowly released odor controlling properties to any suitable absorbent material is also disclosed.

U.S. Patent No. 4,437,429 describes an improved animal litter which extends the life of clay containing litter 2-3 times by the use of zeolites, such as Clinoptilolite.

U.S. Patent No. 4,506,628 describes an animal litter utilizing alumina, aluminosilicates, or coal residues as the substrate intimately mixed with monomers containing acid functionalities which are polymerized in-situ. The resulting mixture is then extruded into pellets of any size or shape.

U.S. Patent No. 4,509,457 describes an animal litter or bedding made from or in conjunction with a porous material as well as a process for the production thereof, the pH value of the porous material being adjusted between approximately 5.0 to approximately 9.0 in the end product by treatment with liquid or gaseous acid substances in order to obtain an optimum smell reducing action.

U.S. Patent No. 4,648,977 describes the removal and conversion of toxic or otherwise contaminating organic impurity constituents in aqueous media such as waste water streams from industrial processes or potable water supplies to harmless oxidation products by contacting such media with an organophilic molecular sieve whereby the organic species are concentrated as adsorbates and thereafter contacting the adsorbate-loaded molecular sieve with an aqueous solution of a compound which has a standard oxidation potential of at least 0.25 volt in an amount and for a sufficient time to convert the organic materials to non-toxic products such as $CO_2$.

U.S. Patent No. 4,744,374 describes crystalline, microporous siliceous materials of regular geometry which are substantially hydrophobic and methods for their preparation. These compounds may be prepared from natural or synthetic hydrated aluminous tectosilicates. These materials are described as being employed as an animal litter, either alone in combination with other absorbent materials.

U.S. Patent No. 4,795,482 describes the elimination of odors attributable to organic molecular species to levels below their olfactory detection level threshold by contact of the odor-producing species with a crystalline silicate molecular sieve material having at least 90% of its tetrahedral oxide units as $SiO_2$ tetrahedra, having pore apertures nominally at least 5.5 Angstroms in diameter, from which the original water of hydration has been substantially removed, having a capacity for adsorbed water not greater than 10% when measured at 25°C at a vapor pressure ($P/P_o$) of 4.6 torr.

U.S. Patent No. 4,826,497 describes fibrous absorbent articles such as disposable diapers, catamenial devices, wound dressings, bandages, incontinence pads, wipes, underwear, shoe inserts, and the like, containing an effective amount of crystalline, siliceous molecular sieve having core diameters of at least about 5.5 Angstroms and a relatively low capacity for adsorbed water, and exhibit enhanced deodorizing properties with respect to the body fluids intended to be absorbed.

U.S. Patent No. 5,013,335 describes the sequestering of ammonia with a crystalline siliceous molecular sieve having an adsorptive capacity for water at 25°C and 4.6 torr of less than 10 weight percent in a framework $SiO_2/Al_2O_3$ molar ratio of from about 50 to infinity, preferably from 200 to 500.

There is still a need, however, for sorbent compositions having improved liquid and odor sorption characteristics. It is, therefore, the purpose of the invention described herein to provide compositions which have improved odor and liquid sorbent characteristics.

## Summary of the Invention

This invention relates to compositions and their use as sorbent materials for dewatering and deodorizing waste materials such as animal urine and industrial and sewer wastes and to processes for preparing such compositions.

In one embodiment, this invention relates to a formed particulate sorbent composition wherein said particles are comprised of (A) at least one powdered zeolite material, and (B) at least one clay material having a clay mineral content of at least 10% by weight.

In another embodiment, this invention relates to a method for preparing the foregoing compositions which comprises first mixing components (A) and (B), then forming particles from said mixture.

Other embodiments of this invention relate to a litter for the accumulation of animal waste comprising the above described composition and also a method for deodorizing organic waste which comprises contacting said waste with the foregoing composition.

## Description of the Preferred Embodiment

As previously stated, the compositions of this invention are formed particulate sorbent compositions comprised of component (A) at least one powdered zeolite material and component (B) at least one clay material having a clay mineral content of at least 10% by weight.

The zeolite materials useful in making the compositions of this invention are those in powdered form and zeolites present in such materials may be natural or synthetic zeolites, or combinations thereof. Zeolites are characterized by an aluminosilicate tetrahedral framework and have ion exchangeable large cations and loosely held water molecules permitting reversible dehydration. The general formula for a zeolite is as follows: $MO \cdot A1_2O_3 \cdot nSiO_2 \cdot xH_2O$, where M is Na, K, Ca, Sr or Ba and n and x are integers. The natural zeolites include Analcime, Chabazite, Erionite, Mordenite, Phillipsite, Clinoptilolite, and Faujasite.

Synthetic zeolites are particularly useful for the purposes of this invention and are illustrated by zeolite A (U.S. Patent No. 2,882,243), zeolite X (U.S. Patent No. 2,882,244), zeolite Y (U.S. Patent No. 3,130,007), zeolite ZK-5 (U.S. Patent No. 3,247,195), zeolite ZK-4 (U.S. Patent No. 3,314,752), zeolite ZSM-5 (U.S. Patent No. 3,702,886), zeolite ZSM-11 (U.S. Patent No. 3,709,979), zeolite ZSM-12 (U.S. Patent No. 3,832,449), zeolite ZSM-20 (U.S. Patent No. 3,972,983), zeolite ZSM-23 (U.S. Patent No. 4,075,842), zeolite ZSM-35 (U.S. Patent No. 4,016,245), and zeolite ZSM-38 (U.S. Patent No. 4,046,859). The foregoing patents are hereby incorporated herein by reference with regard to their teaching of zeolite materials and processes for their preparation. Natural and synthetic zeolite materials useful for the purposes of this invention may be found in Industrial Minerals and Rocks, Vol. 2, 5th Edition, Stanley K. LaFonde, Editor, and Zeolite Molecular Sieves, T. W. Breck (1974), which are hereby incorporated herein by reference for their teaching of zeolite materials and processes for their preparation.

Particularly preferred for the purposes of this invention are zeolite materials wherein the zeolite in said material has a silica/alumina ratio of less than 10, preferably from about 3 up to about 6, and more preferably of about 5. It is also desirable that the sodium content of the zeolite material (measured as $Na_2O$ on a volatile matter free basis) is less than about 15% by weight, preferably less than 5% by weight, and more preferably less than 1% by weight. As used herein with respect to zeolite materials, volatile matter free basis shall mean that the measurement is based on material having been heated at 1000°C to constant weight. Synthetic zeolite materials are preferred and a particularly suitable material useful for the purposes of this invention contains zeolite Y, wherein the sodium present in the zeolite has been partially exchanged with ammonium ions, so that the sodium content (measured as $Na_2O$ on a volatile matter free basis) is less than about 1% by weight. To maximize the odor control capabilities of the compositions of this invention, the amount of ammonia present in the zeolite material should be minimized. Preferably, the zeolite material is treated so that the zeolite material is substantially free of ammonia by, for example, heating the zeolite material at from about 400°F up to about 700°F and removing the ammonia gas for a period of time sufficient to reduce to amount of ammonia to the desired level. Typically, the amount of ammonia present in the zeolite material is less than about 10% by weight on a "as is" basis.

Zeolite materials particularly useful for the purposes of this invention are those obtained in the commercial practice of the embodiment of the invention substantially as described in Examples 1 and 2 of U.S. Patent 4,493,902. These examples describe a process in which microspheres high in zeolite Y content are produced by immersing porous microspheres comprising a mixture of calcined clays in a solution comprising alkaline sodium silicate and a clear solution of "external" amorphous zeolite seeds. The reactants (microspheres of calcined clays and alkaline sodium silicate solution) are heated in the presence of the seeding material and zeolite Y crystals form in-situ in the pores of the channels in the microspheres at levels usually in the range of 50% to 70%. The zeolite materials and procedures described in '902 are hereby incorporated herein by reference for their teachings in this regard.

The component (A) zeolite materials useful for the purposes of this invention may be 100% zeolite, but typically contain other components such as kaolin microspheres. The component (A) zeolite materials usually contain at least about 12% by weight zeolite and, preferably from 20 up to about 50% by weight zeolite.

The zeolite materials useful for the purposes of this invention are in powdered form. Typically, the average particle size of suitable powdered zeolite materials is less than 100 microns, although usually less than 40 microns; preferably less than 20 microns; and more preferably less than 5 microns. It may be necessary to reduce the size of the particles of the zeolite material by grinding or otherwise into the powdered form. The BET (nitrogen method) surface area of zeolites useful for the purposes of this invention is typically from about 400 up to about 600 $m^2/g$, preferably from about 450 up to about 550 $m^2/g$.

The clay materials suitable for use in this invention include sorptive alumina silicate clays such as attapulgites, sepiolites, serpentines and montmorillonites. A sorptive clay is a clay which has the capability of holding an amount of water that is at least about 50% of the weight of the clay. Preferably, the sorptive clays suitable for use in this invention are capable of holding an amount of water that is at least about 100% of the weight of the clay. For the purposes of this invention, the sorbency of clays is measured by the procedure ASTM-F-726-81, oil absorption, Type II adsorbents.

Clay materials useful in making compositions of the instant invention include those obtained from the Meigs - Attapulgus - Quincy fullers earth districts, located in southwest Georgia and northern Florida. In the southern portion of this district, in the vicinity of Attapulgus, Georgia, fullers earth ore horizons consist predominantly of clay mineral palygorskite, and certain minor amounts of smectite and non-clay minerals include quartz, dolomite, calcite, phosphate pellets and various heavy minerals. In the northern portion of the district, in the vicinity of Meigs, Georgia, the predominant mineral phases are smectite and palygorskite with lesser amounts of sepiolite and kaolinite. Non-clay phases include quartz, calcite, dolomite, and a variety of heavy metals. Diatoms are abundant. While highly variable, the mixed deposit appears to be layered with smectite and kaolinite predominating in the near surface environment with palygorskite content increasing with depth.

For purposes herein, the term "attapulgite" is used to mean chain lattice type clay minerals, encompassing minerals and mineral groups variously referred to in the literature as "attapulgite," "palygorskite," "sepiolite," and "hormite." Typically, the clay materials suitable for use in the instant invention contain a major amount of attapulgite. As used herein, "major amount" shall mean and refer to a component which is present in the largest amount of any of the components present.

Those skilled in the art will be familiar with methods to determine the relative amounts of various mineral phases present in such clays. X-ray diffraction techniques can be employed for qualitative determination of the mineral phases present and may be sufficient for determination of single mineral assemblages. XRD does not yield highly accurate numerical estimates on more complex geological materials, but is adequate for the purposes of this invention. Other methods, such as comparing the chemical analyses of the unknown samples with analyses of known, purified clay and mineral components are also useful.

The clay materials suitable for use in the practice of this invention have a total clay mineral component of at least 10%, preferably at least 50% by weight, more preferably at least about 70% by weight and may be undried, dried or calcined.

The free moisture content of the clay materials suitable for use in this invention is preferably from about 3 up to about 8 weight percent. As used herein, the term "free moisture" content refers to the amount of water which is loosely held by the clay material rather than chemically combined water which is an integral part of the crystal lattice of the clay. As used herein, the "free-moisture content" is the amount of water removed from the clay by heating to constant weight at 220°F. Typically, the clay material as mined contains up to about 45% by weight free moisture content.

The clay material for use in this invention is preferably powdered and typically has particles having mesh sizes of less than about 200 mesh (U.S. Standard), preferably less than about 50.

The sorbent compositions of this invention contain zeolite in an amount which provides effective deodorizing capabilities. Typically, this is an amount which provides at least one percent by weight of zeolite in the sorbent clay composition, but usually from about 5 up to about 50% by weight on a volatile matter free basis, preferably from about 10 up to about 20% by weight. The clay material component (B) is present in an amount which provides effective liquid sorbency and typically is present in an amount that is at least about 10% by weight of the sorbent composition of this invention; usually from about 20 up to about 60% by weight and, preferably from about 35 up to about 45% by weight.

The sorbent compositions of this invention may also contain one or more binder materials such as alginates, dextrine, glucose, gums, resins, starch, waxes, glues, sodium silicate, phosphoric acid, ammonium phosphate, aluminum phosphate, silicate hydrosol and these typically are present in an amount from about 1 up to about 10% by weight of the sorbent composition.

The sorbent compositions of this invention are prepared by first mixing the zeolite material component (A), the clay material component (B) and optional binder material. Typically, these components are blended so they are substantially dispersed uniformly, then formed particles are prepared from said mixture. Particles may be formed by techniques well known to those of ordinary skill in the art, such as extrusion or tableting.

The particle sizes of the sorbent compositions of this invention depend on the intended usage. For the purpose of brevity, particle size distribution ranges are referred to herein by the maximum/minimum particle sizes (U.S. Standard). For example, a 4/60 particle size distribution means that substantially all of the particles pass through a 4 mesh screen (U.S. Standard), whereas substantially all of the particles will not pass through a 60 mesh screen (U.S. Standard). The particle sizes used herein are determined by methods known to those of ordinary skill in the art.

The compositions of this invention may be used for dewatering and deodorizing waste materials such as a litter for accumulation of animal waste, an additive for animal litters, and an agent or additive for municipal waste, yard waste compost, sewage waste, and other organic odor generating compositions. When used as an animal litter, the particle size is preferably not so large as to allow urine to pass through the litter material to the bottom of the litter, or to cause discomfort to the animal's paws, but not so small as to be dusty when handled or result in tracking of the clay by the animal's feet. In a useful embodiment, kitty litter compositions of this invention have a particle size distribution of about 4/30 mesh; preferable 5/20 mesh. When the compositions of this invention are used as an additive for an animal litter, the desirable particle size distribution is about 8/50 mesh. In the case of industrial and sewer waste, a useful particle size distribution is about 25/200 mesh.

The sorbent compositions of this invention preferably have free moisture content of less than about 5% by weight.

An example of this invention is included hereinbelow. Of course, this example is not intended as limiting this invention as modification of the example by ordinary expedient will be readily apparent to those of ordinary skill in the art.

Unless otherwise indicated in the following example and elsewhere in the specification and claims, all parts and percentages are by weight, temperatures are in degrees Fahrenheit, and pressures are at or near atmospheric.

The zeolite and clay materials referred to in the following example are characterized in the following tables:

Zeolite Material

The zeolite material is comprised of zeolite Y crystals formed in-situ in the pores of the channels of kaolin microspheres characterized as follows :

| % Volatile Matter | 10 % by Weight |
|---|---|
| % Y Zeolite | 25 % by Weight (Proximate by XRD) |

Unit Cell Size 24.60 angstrom$^3$
Average Particle Size        72 microns
% Wt (Volatile matter free basis)

| | |
|---|---|
| $Al_2O_3$ | 39.5 |
| $SiO_2$ | 57.0 |
| $Na_2O$ | 0.32 |
| $TiO_2$ | 1.64 |
| $Fe_2O_3$ | 0.45 |
| CaO | 0.01 |
| MgO | 0.02 |
| $K_2O$ | 0.02 |

Clay Material

The clay material is an attapulgite clay mined in the Attapulgus region of Georgia having the following characteristics:

### WT% (Volatile Matter Free Basis*)

| | |
|---|---|
| $SiO_2$ | 64.40 |
| $Al_2O_3$ | 9.68 |
| $MgO$ | 9.63 |
| $CaO$ | 7.40 |
| $Fe_2O_3$ | 2.93 |
| $P_2O_5$ | 1.23 |
| $K_2O$ | 0.85 |
| $TiO_2$ | 0.46 |
| $Na_2O_3$ | 0.06 |

### 90% of clay material particles are less than 60 mesh

\* with respect to clay materials this means that the measurements are based on material having been heated at 1200°F to constant weight.

First, the zeolite material is ground in a sand mill to a particle size of less than 20 microns. A mixture of 45 parts of zeolite material and 50 parts of clay material is fed to a batch type pugmill with approximately five parts of water as a lubricant and subjected to moderate shear mixing for approximately 15 minutes to form a plastic mass. The plastic mass obtained is extruded through a die plate equipped with a 1/4" diameter holes and the extrudate is broken into 6" long segments. The extrudates are then dried in a convection oven at a temperature of about 700°F for approximately eight hours. The resulting material is crushed in a ballmill and then sized with 5, 20 and 50 mesh screen as appropriate to yield two granular products having 5/20 and 20/50 mesh sizes.

## Claims

1. A formed particulate sorbent composition wherein the particles comprise (A) at least one powdered zeolite material; and (B) at least one clay material having a clay mineral content of at least 10% by weight.

2. A composition according to claim 1 wherein the average particle size of said zeolite material is less than 100 microns or less than 40 microns.

3. A composition according to claim 1 or 2 wherein the zeolite contained in said zeolite material has any one or more of the following features:
   (a) it comprises synthetic zeolite;
   (b) it comprises zeolite Y;
   (c) it has a silica/alumina ratio of less than 10 or of from 3 to 6;
   (d) it has a sodium content ($Na_2O$) of less than 15% by weight or of less than 5% by weight;
   (e) it has an ammonia content of less than 10% by weight.

4. A composition according to any of claims 1 to 3 wherein the zeolite material has a BET method (nitrogen method) surface area of from 400 up to 600 $m^2$/g.

5. A composition according to any preceding claim wherein said clay material has a clay mineral content of at least 50% by weight, and/or contains a major amount of attapulgite clay, and/or has a particle size of less than 50 mesh (US standard).

6. A composition according to any preceding claim which has a particle size distribution within 4/30 mesh (US standard).

7. A composition according to any preceding claim which further contains a binder material.

8. A litter for the accumulation of animal waste comprising a composition according to any preceding claim.

9. A method for deodorizing organic waste which comprises contacting said waste with a composition according to any one of claims 1 to 7.

10. A method for preparing a composition according to any one of claims 1 to 7 which comprises first mixing components (A) and (B), then forming particles from said mixture.

EP 0 677 244 A1

## European Patent Office

# EUROPEAN SEARCH REPORT

Application Number

EP 95 30 1938

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-91 05464 (NELSON THOMAS E) 2 May 1991<br>* page 10, last paragraph - page 11 *<br>* page 12, last paragraph - page 13, paragraph 2; claims *<br>--- | 1-6,8,9 | A01K1/015<br>B01J20/18 |
| X | EP-A-0 242 683 (LAPORTE INDUSTRIES LTD) 28 October 1987<br>* page 2, line 5 - line 18 *<br>* page 2, line 50 - line 55 *<br>* column 3, line 24 - line 35 *<br>--- | 1-6,8-10 | |
| D,X | US-A-4 437 429 (GOLDSTEIN JOEL ET AL) 20 March 1984<br>* column 2, line 10 - line 16 *<br>* column 2, line 38 - line 45 *<br>--- | 1,3,8,9 | |
| X<br><br>D | WO-A-85 02848 (SCOPAS TECHNOLOGY CO INC) 4 July 1985<br>* page 21, line 11 - line 24 *<br>& US-A-4 744 374 (DEFFEVES ET AL.)<br>--- | 1,3,8,9 | |
| P,A | DE-A-42 43 340 (SUED CHEMIE AG) 23 June 1994<br>* the whole document *<br>--- | 1-10 | TECHNICAL FIELDS SEARCHED (Int.Cl.6)<br><br>A01K<br>B01J |
| P,A | US-A-5 325 816 (PATTENGILL MAURICE G ET AL) 5 July 1994<br>* the whole document *<br>----- | 1-10 | |

The present search report has been drawn up for all claims

| Place of search | Date of completion of the search | Examiner |
|---|---|---|
| THE HAGUE | 28 July 1995 | Blas, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

8